# EUROPÄISCHE PATENTANMELDUNG

(11) **EP 4 760 092 A1**
(43) Veröffentlichungstag der Anmeldung: **17.06.2026**
(21) Anmeldenummer: 24220074.9
(22) Anmeldetag: 16.12.2024
(51) Int. Cl.: F03D 15/10, F03D 80/70

(54) **GETRIEBEANTRIEBSSTRANG MIT VERKIPPUNGSAUSGLEICH**

(71) Anmelder: Flender GmbH, 46395 Bocholt (DE)
(72) Erfinder: WIESKER, Sebastian, 46395 Bocholt (DE); VRIESEN, Johannes, 46395 Bocholt (DE)
(74) Vertreter: Michalski Hüttermann & Partner mbB

(57) **Zusammenfassung**

Getriebeantriebsstrang 10 mit einer Triebstrangachse A_{D} für eine Windkraftanlage 100 zur Drehmomentübertragung in einer Richtung M, umfassend ein Getriebegehäuse 12, zumindest eine erste um die Triebstrangachse A_{D} drehbare Planetenstufe 20 oder zumindest eine erste Planetenstufe 20 und eine nachfolgende Stirnradstufe 44, wobei ein Hohlrad 14 der zumindest ersten Planetenstufe 20 als Gehäusekomponente des Getriebegehäuses 12 ausgebildet ist und die erste Planetenstufe 20 einen Planetenradträger 16 mit einer ersten Mittelachse A_{M1} mit darin aufgenommenen Planetenrädern 18 aufweist, wobei der Planetenradträger 16 mit einem in der Richtung M betrachtet ersten und zweiten Lager 26₁, 26₂ gegenüber dem Getriebegehäuse 12 drehbar gelagert ist. Eine um eine Mittelachse A_{L} verlaufende Lagerlaufbahn 48 eines in zumindest einem gehäuseseitigen Lagersitz 28, 34 aufgenommen Lagerrings 30 des zumindest einen Lagers 26₁, 26₂ weist einen exzentrischen Versatz Vᵣ in eine Richtung der auf den Getriebeantriebsstrang 10 wirkenden Gewichtskraft F_{RG} zueinander auf.

## Beschreibung

Die Erfindung betrifft einen Getriebeantriebsstrang mit einer Triebstrangachse A_{D} für eine Windkraftanlage zur Drehmomentübertragung in einer Richtung M, umfassend ein Getriebegehäuse, zumindest eine erste um die Triebstrangachse A_{D} drehbare Planetenstufe oder zumindest eine erste Planetenstufe und eine nachfolgende Stirnradstufe, wobei ein Hohlrad der zumindest ersten Planetenstufe als Gehäusekomponente des Getriebegehäuses ausgebildet ist und die erste Planetenstufe einen Planetenradträger mit einer ersten Mittelachse A_{M1} mit darin aufgenommenen Planetenrädern aufweist, wobei der Planetenradträger mit einem in einer Richtung M betrachtet ersten und zweiten Lager gegenüber dem Getriebegehäuse drehbar gelagert ist.

Für Windkraftanlagen können sogenannte Dreipunkt-Lagerungen vorgesehen sein. Hierzu werden Kraft und Kippmoment resultierend aus der Getriebemasse durch eine Drehmomentstütze und das Hauptlager der Hauptwelle abgestützt. Dazu sind der Planetenradträger und die Hauptwelle starr miteinander gekoppelt. Der abtriebsseitig angebundene Generator verfügt über eine separate Abstützung am Maschinenträger. Seine Masse wird nicht über die Lagerung von Mehrblattrotor bzw. Hauptwelle oder das Getriebe abgestützt.

Für Windkraftanlagen kann allerdings auch eine Lagerung vorgesehen sein, bei der eine zweifach gestützte Hauptwelle sowie eine Drehmomentstütze vorgesehen ist, wobei die Drehmomentstütze nur in Richtung des zu stützenden Reaktionsmoments eine hohe Steifigkeit aufweist und keine reinen Radialkräfte aufnimmt. Zudem ist der Generator direkt an den Getriebeausgang angeflanscht und verfügt nicht über eine zusätzliche Abstützung am Maschinenträger. Der Planetenradträger ist starr mit der Hauptwelle verbunden. Bei diesem Aufbau ruht das gesamte Gewicht der Getriebe-Generatoreinheit, mit Ausnahme des eingangsseitigen Planetenradträgers, auf der Lagerung des Planetenradträgers.

Durch das Eigengewicht der Getriebe-Generatoreinheit - auch als Rumpfgetriebe zu bezeichnen - und infolge von Lagernachgiebigkeiten entsteht in der Lagerung eine Verformung, die zu einer ungünstigen Verkippung in der Verzahnung führen kann. Diesen Effekt gibt es insbesondere bei einer einseitigen Lagerung oder relevanter Einsenkung aufgrund hoher Gewichtslast des Rumpfgetriebes bzw. hoher Lagernachgiebigkeit. Die Verkippung in der Verzahnung führt zu einer ungleichmäßigen und ungünstigen Belastung und muss in der Dimensionierung mitberücksichtigt werden, was zu schwereren Auslegungen oder zu Getrieben mit geringerer Drehmomenttragfähigkeit führt. Es besteht ein ständiges Bedürfnis die Verkippung in der Verzahnung zu minimieren, bestenfalls sogar zu eliminieren.

Es ist die Aufgabe der Erfindung Maßnahmen aufzuzeigen, die die Verkippung in der Verzahnung zumindest minimieren.

Die Lösung der Aufgabe erfolgt durch einen Getriebeantriebsstrang mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft einen Getriebeantriebsstrang mit einer Triebstrangachse A_{D} für eine Windkraftanlage zur Drehmomentübertragung in einer Richtung M, umfassend ein Getriebegehäuse, zumindest eine erste um die Triebstrangachse A_{D} drehbare Planetenstufe oder zumindest eine erste Planetenstufe und eine nachfolgende Stirnradstufe, wobei ein Hohlrad der zumindest ersten Planetenstufe als Gehäusekomponente des Getriebegehäuses ausgebildet ist und die erste Planetenstufe einen Planetenradträger mit einer ersten Mittelachse A_{M1} mit darin aufgenommenen Planetenrädern aufweist, wobei der Planetenradträger mit einem in der Richtung M betrachtet ersten und zweiten Lager gegenüber dem Getriebegehäuse drehbar gelagert ist, wobei ein um die zur vereinfachten Vorstellung als horizontal angenommene Triebstrangachse A_{D} angeordneter gehäuseseitiger Lagersitz zumindest eines der beiden Lager und eine um eine Mittelachse A_{L} verlaufende Lagerlaufbahn eines in dem Lagersitz aufgenommen Lagerrings des zumindest einen Lagers einen exzentrischen Versatz in eine Richtung der auf den Getriebeantriebsstrang wirkenden Gewichtskraft F_{RG} zueinander aufweisen.

Für die gesamte hier vorgenommene Betrachtung ist zwischen einem unbelasteten und einem belasteten Zustand zu unterscheiden. Ein Zustand, in dem die Gewichtskraft nicht auf den Getriebeantriebsstrang oder auf einzelne seiner Komponente wirkt, kann auch als entlasteter bzw. unbelasteter Zustand bezeichnet werden. In einem solchen Zustand wird der Getriebeantriebsstrang nicht von der eigenen Gewichtskraft belastet, so dass es keine Verformungen infolge von Materialnachgiebigkeiten gibt. Auch ein Spiel zwischen beweglichen Teilen wird nicht zur einen Seite hin ausgenutzt, sondern befindet sich in der Mitte des Spiel- bzw. Toleranzbereichs. Dieser Zustand, in dem die eigene Gewichtskraft nicht wirksam ist, kann zunächst einmal auch als ein virtueller Zustand beschrieben werden, auf den in der Konstruktionsphase in einem entsprechenden Berechnungsprogramm ausgelegt wird.

Neben der Triebstrangachse A_{D} kann für die erste Planetenstufe eine erste Mittelachse A_{M1} und für das Getriebegehäuse einschließlich eventuell vorhandener weiterer Planetenstufen eine zweite Mittelachse A_{M2} definiert werden. Für den beschriebenen unbelasteten Zustand kann konkret vorgesehen sein, dass die zweite Mittelachse A_{M2} ausgehend von einem Schnittpunkt mit der ersten Mittelachse A_{M1} in der Richtung der zumindest zweiten Planetenstufe nach vertikal oben geneigt ist. In dem beschriebenen unbelasteten Zustand ist die Mittelachse A_{M2} des Getriebegehäuses unter einem Winkelbetrag α_{VK} zu der Triebstrangachse A_{D} angeordnet, so dass zwischen den Verzahnungen eine Verkippung herrscht. Diese Verkippung in dem unbelasteten Zustand ist allerdings ein virtueller Zustand, da sich der Getriebeantriebsstrang nicht in Betrieb befindet. Wird nun der unbelastete Zustand aufgelöst, so wirkt das infolge der Gewichtskraft des Getriebegehäuses und der weiteren Planetenstufen resultierende Kippmoment und es kommt zu einem Einfedern des Getriebegehäuses und die Verkippung in der Verzahnung reduziert sich oder wird sogar beseitigt.

Durch den vorgeschlagenen Getriebeantriebsstrang kann der negative Effekt der Verkippung der Verzahnung insbesondere der ersten Planetenstufe vermieden oder zumindest so weit reduziert werden, dass ein deutlich besseres Tragverhalten der Verzahnungen erzielt wird. Eine ungleichmäßige Belastung innerhalb der Verzahnung der ersten Planetenstufe - insbesondere zwischen Hohlrad und Planetenrädern - wird vermieden. Der initiale bzw. konstruktiv vorgesehene exzentrische Versatz zwischen gehäuseseitigem Lagersitz und Lagerlaufbahn des einsitzenden Lagerrings bewirkt, dass die Planetenachsen keinen Winkelversatz zu dem Hohlrad im Betriebszustand zeigen und gleichmäßige Belastung in der Verzahnung der ersten Planetenstufe gewährleitet ist. Allein durch den Einsatz von erfindungsgemäß gefertigten Planetenradträgerlagern wird eine Kompensation des negativen Effekts der Verkippung in der Verzahnung erreicht. Ein weiterer Vorteil ist, dass auch ohne die beschriebene Kompensation der Verkippung entwickelte Getriebe nachgerüstet werden könnten. In der ersten Planetenstufe erhöht sich damit die Sicherheit bzw. Tragfähigkeit

In einer bevorzugten Ausgestaltung des Getriebeantriebsstrangs ist der exzentrische Versatz Vᵣ der Lagerlaufbahn des gehäuseseitigen Lagerrings des ersten Lagers bezogen auf die Triebstrangachse entgegengesetzt zu der Richtung der auf den Getriebeantriebsstrang wirkenden Gewichtskraft F_{RG} gerichtet. Folglich ist der rotierende Lagerring des ersten Lagers verschoben und damit der gelagerte Planetenradträger gegenüber dem Ausgangszustand verkippt.

In einer zudem bevorzugten Ausgestaltung des Getriebeantriebsstrangs ist der exzentrische Versatz Vᵣ der Lagerlaufbahn des gehäuseseitigen Lagerrings des zweiten Lagers bezogen auf die Triebstrangachse A_{D} in Richtung der auf den Getriebeantriebsstrang wirkenden Gewichtskraft F_{RG} gerichtet. Folglich ist der rotierende Lagerring des zweiten Lagers verschoben und damit der gelagerte Planetenradträger gegenüber dem Ausgangszustand verkippt.

Somit kann vorgesehen sein, dass die Lagerlaufbahn des ersten Lagers, welches das rotorseitige Lager ist, und/oder die Lagerlaufbahn des zweiten Lagers, welches das generatorseitige Lager ist, in entgegengesetzte Richtung verschoben sind. In konkreter Ausgestaltung kann vorgesehen sein, dass das erste und das zweite Lager jeweils als Wälzlagerung ausgeführt sind. In einer bezüglich der Lageranordnung möglichen Ausgestaltung kann vorgesehen sein, das erste und das zweite Lager in der Drehmomentrichtung M betrachtet auf entgegengesetzten Seiten des Planetenradträgers angeordnet sind. In einer bezüglich der Lageranordnung alternativen Ausgestaltung kann vorgesehen sein, dass das erste und das zweite Lager als doppelte Kegelrollenlagerung in O-Anordnung oder X-Anordnung in der Richtung M betrachtet eingangsseitig oder ausgangsseitig des Planetenradträgers ausgeführt ist.

In einer weiterhin bevorzugten Ausgestaltung kann vorgesehen sein, dass eine Mittelachse A_{L} der Lagerlaufbahn des gehäuseseitige Lagerrings des ersten und/oder des zweiten Lagers zusätzlich winklig gegenüber der Triebstrangachse A_{D} angestellt ist.

In einer zudem bevorzugten Ausgestaltung des Getriebeantriebsstrangs ist vorgesehen, dass ein Lageraußenring des ersten Lagers in dem gehäuseseitigen Lagersitz und ein Lagerinnenring oder ein Lageraußenring des zweiten Lagers in dem gehäuseseitigen Lagersitz gehalten ist.

In weiterer Ausgestaltung des Getriebeantriebsstrangs kann vorgesehen sein, dass der zumindest einen Planetenstufe eine mit dem Getriebegehäuse verbundene elektrische Maschine nachgeordnet ist.

Die Aufgabe wird weiterhin gelöst durch eine Windkraftanlage, mit einer von einem Rotorflansch mit einem Mehrblattrotor angetriebenen Rotorwelle, wobei die Rotorwelle einen wie beschrieben ausgebildeten Getriebeantriebsstrang antreibt.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung eines Antriebsstrangs einer Windkraftanlage,
Fig. 2: schematisch und auszugsweise einen Getriebeantriebsstrang,
Fig. 3: eine Detaillierung des Getriebeantriebsstrang nach Fig. 2 mit radial versetzter Planetenradträgerlagerung,
Fig. 4, 5: eine Ausführung eines Getriebeantriebsstrangs zur Kompensation eines winkligen Abkippens und
Fig. 6: eine Detaillierung des ersten Lagers des ersten Planetenradträgers.

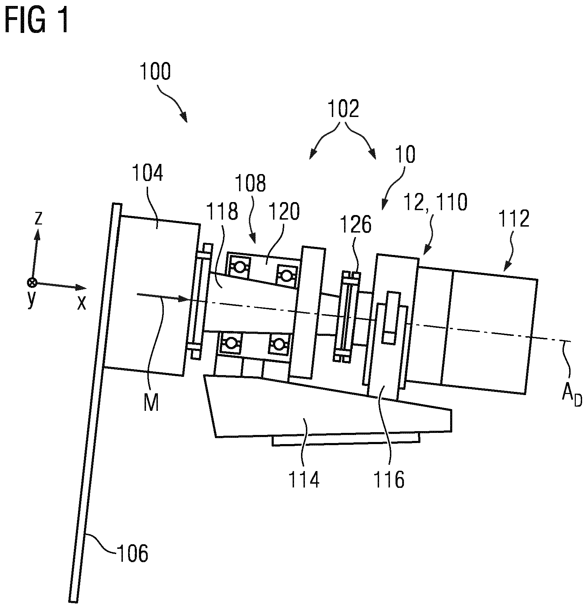

Die Figur 1 zeigt in schematischer und nicht maßstabsgetreuer Darstellung eine Windkraftanlage 100 in einer möglichen Ausführung. Gezeigt ist eine Seitenansicht mit teilweiser Schnittdarstellung. Die Windkraftanlage 100 steht gegenüber einem nicht dargestellten Turm unter einer Neigung, die in der Regel ca. 5° beträgt. Die vorliegende Beschreibung erfolgt unabhängig von dieser Neigung und bezieht sich mit ihren Angaben auf das in der Figur 1 eingezeichnete Koordinatensystem x-y-z. Eine Triebstrangachse A_{D} der Windkraftanlage 100 verläuft parallel zur der x-Achse des Koordinatensystems x-y-z.

Wesentliches Element der Windkraftanlage 100 ist ein Antriebstrang 102, der vorliegend strukturell einen Rotorflansch 104 mit einem Mehrblattrotor 106, eine Rotorlagerung 108, eine Getriebekomponente 110 und einen Generator 112 umfassen kann. Über einen Maschinenträger 114 werden zumindest die Rotorlagerung 108 und der Generator 112 über einen nicht dargestellten Turm auf einem Boden abgestützt. Die Rotorlagerung 108 umfasst eine Rotorwelle 118, die z.B. über eine angestellte Kegelrollenlagerung gegenüber einem Rotorlagergehäuse 120 der Rotorlagerung 108 drehbar um die Triebstrangachse A_{D} gelagert ist. Die Triebstrangachse A_{D} bestimmt eine axiale Richtung. Mit M ist eine Drehmomentrichtung in einem bestimmungsgemäßen Betriebszustand bezeichnet.

An einem Ende der Rotorwelle 118 ist der Rotorflansch 104 und an diesem der Mehrblattrotor 106 gehalten. Das andere Ende der Rotorwelle 118 ist mit einer Getriebekomponente 110 antriebsmäßig verbunden, um ein von dem Mehrblattrotor 106 aufgebrachtes Antriebsmoment zu übersetzen. Die Getriebekomponente 110 ist als Planetengetriebe mit einer oder mehreren Planetenstufen ausgeführt. Die Getriebekomponente 110 ist antriebsmäßig mit dem Generator 112 verbunden. Über einen Flansch 126 ist die Rotorwelle 118 mit der Getriebekomponente 110 verbunden. Ein aus der Drehmomentübersetzung resultierendes Reaktionsmoment der Getriebekomponente 110 - und auch des angeflanschtes Generators 112 - ist über eine Drehmomentstütze 116 gegenüber dem Maschinenträger 114 abgestützt. Hierbei kann in einer ersten Variante die Drehmomentstütze 116 - wie in der Figur 1 dargestellt - die Getriebekomponente 110 unmittelbar mit dem Maschinenträger 114 verbinden. Der Maschinenträger 114, die Rotorlagerung 108 mit Rotorwelle 118, die Drehmomentstütze 116 und die Getriebekomponente 110 können als Getriebeantriebsstrang 10 bezeichnet werden.

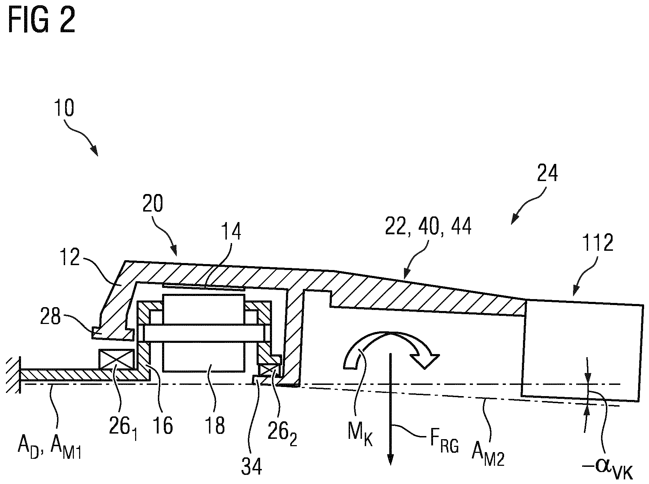

Die Figur 2 zeigt schematisch und auszugsweise einen um die Triebstrangachse A_{D} antreibbaren Getriebeantriebsstrang 10 für eine Windkraftanlage 100, wie beispielsweise in Figur 1 dargestellt. Es ist ein Getriebegehäuse 12 vorgesehen, in dem vorliegend eine erste, eine zweite und eine dritte Planetenstufe 20, 22 und 40 und eine Stirnradstufe 44 aufgenommen sein kann. Es kann an das Getriebegehäuse 12 auch ein Generator 112 angeflanscht sein. Die zweite und dritte Planetenstufe 22 und 40 und die Stirnradstufe 44 sind vorliegend nur anhand ihrer Bezugszeichen als Platzhalter dargestellt. Ein Hohlrad 14 der ersten Planetenstufe 20 ist als Gehäusekomponente des Getriebegehäuses 12 ausgebildet. Die erste Planetenstufe 20 weist einen Planetenradträger 16 mit darin aufgenommenen Planetenrädern 18 auf. Ein Sonnenrad der Planetenstufe 20 ist vorliegend nicht dargestellt. Der Planetenradträger 16 ist zu einer ersten axialen Seite mit einem ersten Lager 26₁ und zu einer zweiten axialen Seite mit einem zweiten Lager 26₂ gegenüber dem Getriebegehäuse 12 drehbar gelagert. Das Getriebegehäuse 12 weist hierfür entsprechende gehäuseseitige Lagersitze 28 und 34 auf. Die Bezeichnungen erste und zweite axiale Seite beziehen sich zunächst auf die Triebstrangachse A_{D}. Ferner wird für diese Betrachtung festgelegt, dass die erste axiale Seite die dem Mehrblattrotor 106 zugewandte Seite - vgl. Figur 1 - und die zweite axiale Seite die dem Generator 112 zugewandte Seite ist.

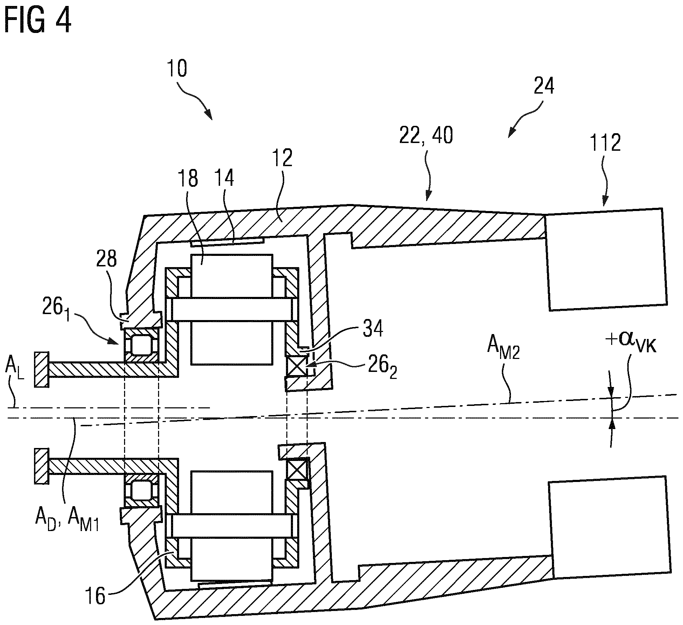

Das Hohlrad 14 der ersten Planetenstufe 20, die zweite und dritte Planetenstufe 22, 40 und der eventuell vorgesehene Generator 112 sind nachfolgend auch mit dem Bezugszeichen 24 versehen und als Rumpfgetriebe bezeichnet. Das Getriebegehäuse 12 wird als Teil des Rumpfgetriebes 24 betrachtet. Für den Planetenradträger 16 der erste Planetenstufe 20 und das Rumpfgetriebe 24 können jeweilige komponenteneigene Mittelachsen A_{M1} und A_{M2} definiert werden. Durch das aus der Gewichtskraft F_{RG} des Rumpfgetriebes 24 resultierende Kippmoment M_{K} und infolge eines ggf. vorhandenen Lagerspiels und einer Nachgiebigkeit der Lager 26₁, 26₂ und der Gehäusestruktur bzw. der Lagersitze erfährt das Rumpfgetriebe 24 ein winkliges Abkippen. Dieses winklige Abkippen ist in der Figur 2 dargestellt und kann als belasteter Zustand bezeichnet werden, im Gegensatz zu einem unbelasteten Zustand, in dem keine Gewichtskraft F_{RG} wirksam ist und der zu der Figur 4 beschrieben wird. Die Mittelachse A_{M2} des Rumpfgetriebes 24 ist folglich um einen Winkel -α_{VK} bezogen auf die Mittelachse A_{M1} der ersten Planetenradträgers 16 nach unten abgekippt bzw. geneigt. Die abgekippte Mittelachse A_{M2} des Rumpfgetriebes 24 ist unter dem Winkel -α_{VK} verkippt, wobei der Betrag des Winkels α_{VK} die Lage der Mittelachse A_{M2} des Rumpfgetriebes 24 zu der Mittelachse A_{M1} des ersten Planetenradträgers 16 beschreibt. Das negative Vorzeichen des Winkels α_{VK} beschreibt die Orientierung, in der die Mittelachse A_{M2} zu der Mittelachse A_{M1} steht, nämlich ausgehend von einem Schnittpunkt zwischen Mittelachse A_{M1} und Mittelachse A_{M2} ist die Mittelachse A_{M2} in der Richtung des Rumpfgetriebes 24 nach vertikal unten geneigt.

Das winklige Abkippen -α_{VK} führt zu einer Verkippung der Verzahnung in der Planetenstufe 20, insbesondere zwischen Hohlrad 14 und Planetenrädern 18 des Planetenradträgers 16. Für die hier vorgenommene Betrachtung des winkligen Abkippens infolge der Gewichtskraft F_{RG} des Rumpfgetriebes 24 und des resultierenden Kippmoment M_{K} wird von einer festen bzw. unveränderten Position des Planetenradträgers 16 ausgegangen.

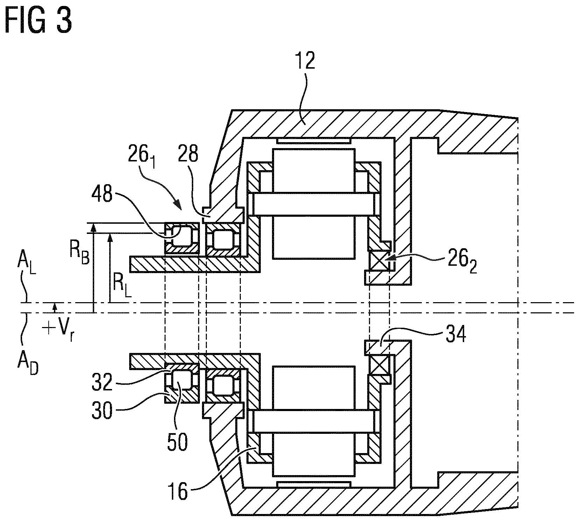

Die Figuren 3, 4 und 5 zeigen eine Ausführung eines Getriebeantriebsstrang 10 zur Kompensation des winkligen Abkippens infolge der Gewichtskraft F_{RG} des Rumpfgetriebes 24. Die Figur 3 zeigt für das linke, d.h. das rotorseitige, Lager 26₁ eine Gegenüberstellung einer herkömmlichen Lagerkonfiguration und einer Lagerkonfiguration zur Kompensation des winkligen Abkippens infolge der Gewichtskraft F_{RG} des Rumpfgetriebes 24. Das Lager 26₁ sitzt in jedem Fall in einem Lagersitz 28 des Getriebegehäuses 12. Der Lagersitz 28 ist um die Triebstrangachse A_{D} konzentrisch angeordnet und weist einen mit R_{B} bezeichneten Bohrungsradius auf. Das Lager 26₁ ist vorliegend als Wälzlager ausgeführt und weist einen äußeren Lagerring 30, einen inneren Lagerring 32 und dazwischen laufende Wälzkörper 50 auf. Der Lagerring 30 hat eine Lagerlaufbahn 48 mit einer Mittelachse A_{L} mit einem als R_{L} bezeichneten Laufbahnradius. Bei der Lagerkonfiguration zur Kompensation des winkligen Abkippens ist nun der gehäuseseitige Lagerring 30 des Lagers 26₁ derart verändert, dass ein exzentrischer Versatz Vᵣ zwischen der Mittelachse A_{L} der Lagerlaufbahn 48 und der Triebstrangachse A_{D} des Lagersitzes 28 besteht. Dieser exzentrische Versatz Vᵣ ist in der Figur 3 über den Bohrungsradius R_{B}, den Laufbahnradius R_{L} und die nicht zentrisch, sondern beabstandet parallel, zueinander verlaufende Triebstrangachse A_{D} und Mittelachse A_{L} dargestellt. In der Figur 3 sind das Getriebegehäuse 12 und der Planetenradträger 16 noch in einer koaxialen Position zueinander gezeigt.

Die Figur 4 zeigt den unbelasteten Zustand, in dem das Rumpfgetriebe 24 nicht von der eigenen Gewichtskraft F_{RG} belastet ist, so dass es keine Verformungen infolge von Materialnachgiebigkeiten gibt. Zudem sind in der Figur 4 der exzentrische Versatz Vᵣ zwischen der Mittelachse A_{L} der Lagerlaufbahn 48 und der Triebstrangachse A_{D} des Lagersitzes 28, wie in der Figur 3 beschrieben, dargestellt. Der Planetenradträger 16 hat in der Figur 3 und 4 eine unveränderte horizontale Position, so dass sich in der Figur 4 das Getriebegehäuse 12 und das Rumpfgetriebe 24 durch ein Verschwenken nach vertikal oben dem exzentrischen Versatz Vᵣ zwischen der Mittelachse A_{L} der Lagerlaufbahn 48 und der Triebstrangachse A_{D} des Lagersitzes 28 angepasst hat. Die Mittelachse A_{M2} des Rumpfgetriebes 24 ist folglich um einen Winkel +α_{VK} bezogen auf die Mittelachse A_{M1} des ersten Planetenradträgers 16 nach oben geneigt.

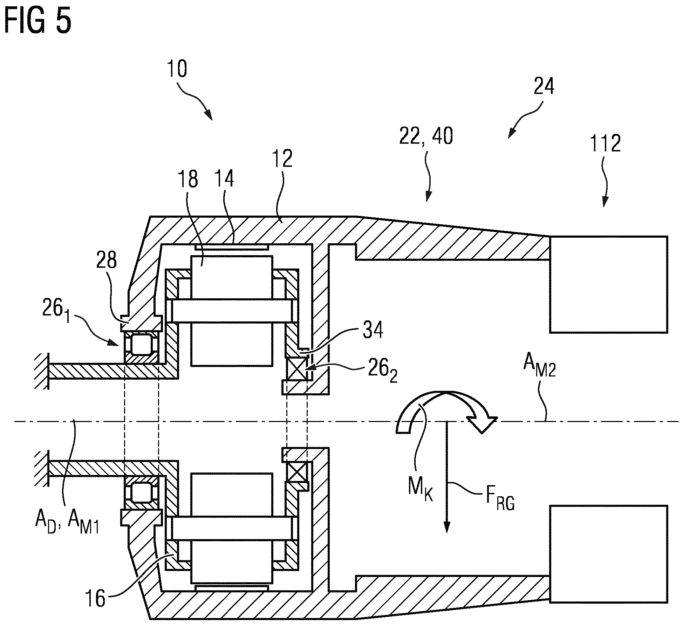

Die Figur 5 zeigt den belasteten Zustand, in dem das Rumpfgetriebe 24 durch das aus der Gewichtskraft F_{RG} resultierende Kippmoment M_{K} ein winkliges Abkippen nach unten erfährt. Infolge des zu Figur 3 und 4 beschriebenen exzentrischen Versatzes Vᵣ zwischen der Mittelachse A_{L} der Lagerlaufbahn 48 und der Triebstrangachse A_{D} des Lagersitzes 28 liegt die Mittelachse A_{M2} des Rumpfgetriebes 24 nun koaxial zu der Mittelachse A_{M1} des ersten Planetenradträgers 16 und koaxial zu der Triebstrangachse A_{D}. Dieser koaxiale Verlauf der beiden Mittelachsen A_{M1} und A_{M2} zueinander stellt sicher, dass es zu keiner Verkippung der Verzahnung in der Planetenstufe 20, insbesondere zwischen Hohlrad 14 und Planetenradträger 16 kommt.

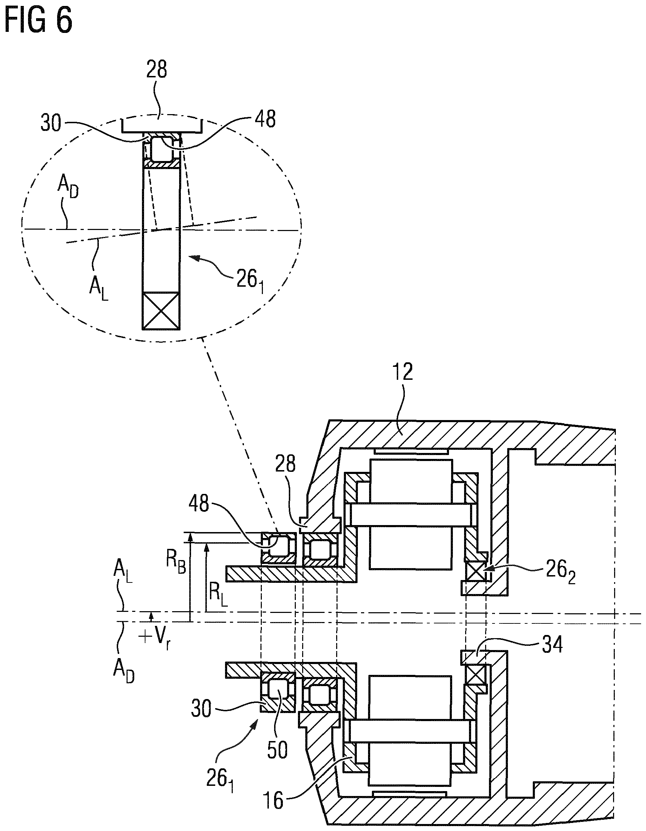

Die Figur 6 zeigt eine Detaillierung des ersten Lagers 26₁. Zu erkennen ist das eine Mittelachse A_{L} einer Laufbahn 48 des gehäuseseitige Lagerring 30 des ersten Lagers 26₁ winklig gegenüber der Triebstrangachse A_{D} angestellt ist.

### Bezugszeichenliste

- 10: Getriebeantriebsstrang
- 12: Getriebegehäuse
- 14: Hohlrad
- 16: Planetenradträger
- 18: Planetenräder
- 20: Planetenstufe
- 22: Planetenstufe
- 24: Rumpfgetriebe
- 26: Lager
- 28: Lagersitz
- 30: Lagerring
- 32: Lagerinnenring
- 34: Lagersitz
- 40: Planetenstufe
- 44: Stirnradstufe
- 48: Lagerlaufbahn
- 50: Wälzkörper
- 100: Windkraftanlage
- 102: Antriebstrang
- 104: Rotorflansch
- 106: Mehrblattrotor
- 108: Rotorlagerung
- 110: Getriebekomponente
- 112: Generator
- 114: Maschinenträger
- 116: Drehmomentstütze
- 118: Rotorwelle
- 120: Rotorlagergehäuse
- 126: Flansch

## Patentansprüche

1. Getriebeantriebsstrang (10) mit einer Triebstrangachse (A_{D}) für eine Windkraftanlage (100) zur Drehmomentübertragung in einer Richtung (M), umfassend ein Getriebegehäuse (12),
zumindest eine erste um die Triebstrangachse (A_{D}) drehbare Planetenstufe (20) oder zumindest eine erste Planetenstufe (20) und eine nachfolgende Stirnradstufe (44), wobei ein Hohlrad (14) der zumindest ersten Planetenstufe (20) als Gehäusekomponente des Getriebegehäuses (12) ausgebildet ist und die erste Planetenstufe (20) einen Planetenradträger (16) mit einer ersten Mittelachse (A_{M1}) mit darin aufgenommenen Planetenrädern (18) aufweist, wobei der Planetenradträger (16) mit einem in der Richtung (M) betrachtet ersten und zweiten Lager (26₁, 26₂) gegenüber dem Getriebegehäuse (12) drehbar gelagert ist,
wobei ein um die als horizontal angenommene Triebstrangachse (A_{D}) angeordneter gehäuseseitiger Lagersitz (28, 34) zumindest eines der beiden Lager (26₁, 26₂) und eine um eine Mittelachse (A_{L}) verlaufende Lagerlaufbahn (48) eines in dem Lagersitz (28) aufgenommen Lagerrings (30) des zumindest einen Lagers (26₁, 26₂) einen exzentrischen Versatz (Vᵣ) in einer Richtung der auf den Getriebeantriebsstrang (10) wirkenden Gewichtskraft (F_{RG}) zueinander aufweisen.

2. Getriebeantriebsstrang (10) nach Anspruch 1, **dadurch gekennzeichnet, dass** der exzentrische Versatz (+Vᵣ) der Lagerlaufbahn (48) des ersten Lagers (26₁) bezogen auf die Triebstrangachse (A_{D}) entgegengesetzt zu der Richtung der auf den Getriebeantriebsstrang (10) wirkenden Gewichtskraft (F_{RG}) gerichtet ist.

3. Getriebeantriebsstrang (10) nach Anspruch 1 oder 2, **dadurch gekennzeichnet, dass** der exzentrische Versatz (+Vr) der Lagerlaufbahn (48) des zweiten Lagers (26₂) bezogen auf die Triebstrangachse (A_{D}) in Richtung der auf den Getriebeantriebsstrang (10) wirkenden Gewichtskraft (F_{RG}) gerichtet ist.

4. Getriebeantriebsstrang (10) nach einem der Ansprüche 1 bis 3, **dadurch gekennzeichnet, dass** das erste und das zweite Lager (26₁, 26₂) jeweils als Wälzlagerung oder Gleitlagerung ausgeführt ist.

5. Getriebeantriebsstrang (10) nach einem der Ansprüche 1 bis 4, **dadurch gekennzeichnet, dass** das erste und das zweite Lager (26₁, 26₂) als doppelte Kegelrollenlagerung in O-Anordnung oder X-Anordnung in der Richtung (M) betrachtet eingangsseitig oder ausgangsseitig des Planetenradträgers (16), oder mit einer anderen Lagerbauform, ausgeführt ist.

6. Getriebeantriebsstrang (10) nach einem der Ansprüche 1 bis 4, **dadurch gekennzeichnet, dass** das erste und das zweite Lager (26₁, 26₂) in der Richtung (M) betrachtet auf entgegengesetzten Seiten des Planetenradträgers (16) angeordnet sind.

7. Getriebeantriebsstrang (10) nach einem der Ansprüche 1 bis 6, **dadurch gekennzeichnet, dass** ein Lageraußenring (30) des ersten Lagers (26₁) in dem gehäuseseitigen Lagersitz (28) und ein Lagerinnenring (32) oder ein Lageraußenring des zweiten Lagers (26₂) in dem gehäuseseitigen Lagersitz (34) gehalten ist.

8. Getriebeantriebsstrang (10) nach einem der Ansprüche 1 bis 7, **dadurch gekennzeichnet, dass** eine Mittelachse (A_{L}) der Lagerlaufbahn (48) des gehäuseseitigen Lagerrings (30) des ersten und/oder des zweiten Lagers (26₁, 26₂) winklig gegenüber der Triebstrangachse (A_{D}) angestellt ist.

9. Getriebeantriebsstrang (10) nach einem der Ansprüche 1 bis 8, **dadurch gekennzeichnet, dass** der zumindest einen Planetenstufe (20) eine mit dem Getriebegehäuse (12) verbundene elektrische Maschine (112) nachgeordnet ist.

10. Windkraftanlage (100), umfassend eine von einem Rotorflansch (104) mit einem Mehrblattrotor (106) angetriebene Rotorwelle (118), **dadurch gekennzeichnet, dass** die Rotorwelle (118) einen nach Anspruch 9 ausgebildeten Getriebeantriebsstrang (10) antreibt.
